# EUROPEAN PATENT APPLICATION

(11) **EP 4 596 611 A1**
(43) Date of publication of application: **06.08.2025**
(21) Application number: 25155435.8
(22) Date of filing: 31.01.2025
(51) Int. Cl.: C08J 5/18

(54) **A POLYVINYL ALCOHOL AND STARCH-BASED FILM FOR OVERCOMING MOISTURE ABSORPTION AND EXUDATION AND PREPARATION METHOD THEREFOR**

(30) Priority: 02.02.2024 HK 32024086434
(71) Applicant: Bioceanland Limited, Kwai Chung, New Territories (HK)
(72) Inventor: LI, Xingjin, Huangdui Township, Yucheng County, Shandong (CN)
(74) Representative: Beck & Rössig European Patent Attorneys

(57) **Abstract**

The present invention belongs to the technical field of starch-based polyvinyl alcohol plastic films and relates to a modified polyvinyl alcohol starch film and a method for its preparation. The raw material for preparing said modified polyvinyl alcohol starch film comprises, in a weight proportion, 30-120 parts by weight of starch, 60-100 parts by weight of polyvinyl alcohol, 10-30 parts by weight of plasticizer, 0.1-20 parts by weight of modified aluminosilicate crystals, 0.5-10 parts by weight of processing aids, 0.1-10 parts by weight of polyhexamethylene guanidine hydrochloride, and 0.01-0.2 parts by weight of hydroxy ethyl methacrylate. The modified polyvinyl alcohol starch film can be better prepared utilizing the modified polyvinyl alcohol starch film and preparation method therefor in the present invention. Polyvinyl alcohol starch itself is a hygroscopic material and can absorb moisture in the air which becomes slimy. In weather with extremely high ambient humidity such as during damp seasons, such film may even directly dissolve, causing the contents to leak. The modified polyvinyl alcohol starch film prepared in the present invention is water-resistant and is not susceptible to moisture absorption and exudation due to the influence of ambient temperature and humidity.

## Description

### FIELD OF THE INVENTION

The present invention belongs to the technical field of starch-based polyvinyl alcohol starch plastic film and relates to a modified polyvinyl alcohol starch film and its preparation method.

### BACKGROUND OF THE INVENTION

In recent years, as environmental awareness and protection requirements continue to improve, new technologies and products conducive to environmental protection continue to appear, specifically in the field of starch-based plastics. Starch is a natural polymer compound found in nature and comes from a wide range of sources. It is inexpensive, easy to collect and purify, renewable, and easily biodegradable. Polyvinyl alcohol (PVA) is a water-soluble, biodegradable, low-cost polymer. Water-soluble films based on polyvinyl alcohol (PVA) or PVA/starch have emerged and been developed. PVA is also susceptible to biodegradation, but the process is particularly slow. Moreover, the number of microorganisms capable of degrading PVA is very limited compared to those that degrade aliphatic polyesters. The biodegradability of starch and PVA blends has been studied, and it was discovered that the rate of biodegradation of starch and PVA composite films is influenced by the content of PVA in the composite. The degradation rate of the co-blend was significantly faster than that of pure PVA. The starch-PVA blend is a biodegradable,water degradable, and environmentally friendly material, with excellent degradability, antistatic characteristics, chemical corrosion resistance, gas barrier capabilities, strong mechanical physical properties, and high light transmittance. Its degradation generates only CO2 and water, making it a green, low-carbon material, with unlimited market prospects.

For example, China Patent publication no. CN1157438C disclosed a water-soluble film, which is made from PVA or PVA plus starch, mixed with plasticizers and modifiers in a certain proportion, and then processed in a high-mixing machine with heating and cooling to be plasticized, followed by single/twin-screw melting and plasticizing extrusion and granulation, and finally blown into film by a film blowing machine. The product corresponding to this patent application has already been launched on the market. After years of market promotion and application, it has undergone great development and progress, and basically realized the production of water-soluble film prepared by dry-process melting and plasticizing extrusion.

Japanese Patent publication no. JP77110782 reported a melt blowing polyvinyl alcohol film forming method, its technical characteristics is to use a large amount of water (content greater than 40%) as a plasticizer, in order to reduce the melting point of polyvinyl alcohol, so that it is lower than the decomposition temperature of polyvinyl alcohol under the conditions of the blown film forming process. However, this preparation method is not stable in actual production, coupled with the presence of a large amount of water in the system, making the extruded resin prone to blistering, which results in uneven film formation. Moreover, to this day, the patented product cannot overcome the problem of film products (including normal temperature water-soluble film and medium-high temperature film) being susceptible to moisture absorption and exudation due to environmental temperature and humidity, which seriously affects the quality, stability and functionality of film products. The reasons and specific manifestations are as follows: PVA and starch are both high-molecular compounds containing hydroxyl groups, which are hygroscopic in nature. It causes the strength of the film to decrease and the surface of the film to become uneven after moisture absorption and exudation. Small molecular compounds are affected by temperature, humidity and atmospheric pressure, causing them to exude to the surface of the film to form an oily substance that can contaminate the contents.

Therefore, it is necessary to improve the moisture absorption and permeability of water-soluble films based on PVA or PVA/starch. However, methods such as blending, surface grafting, and interfacial polymerization, which have been used in prior art, have achieved little success.

In addition, there are two production processes for existing PVA water-soluble films. The first process is wet casting production process, which cannot produce high-starch PVA products. It is made by dissolving PVA in water to form a gel with a solid content of 15%, and then adding surfactants, plasticizers and other additives to mix well. The liquid is extruded through a casting machine, and the film is made by heating and drying to remove the moisture by passing through a roller or steel belt with a heating function. This process is complicated, requires large production equipment, results in extremely low yield, and has high production cost. The other process is the melt-blown film process, which involves adding plasticizers, heat stabilizers, antioxidants, lubricants, and other materials to PVA or PVA/starch, thoroughly mixing them, and then putting them into a high-mixer with heating function for plasticizing. The plasticized material is then put into a single- or twin-screw granulator for granulation, and then blown into the required film through a film blowing machine. This process has high output, low production costs, and requires minimal investment in production equipment. However, the products produced are susceptible to environmental temperature and humidity, which makes the films prone to moisture absorption and exudation.

### SUMMARY OF THE INVENTION

It is an objective of the present invention to provide modified polyvinyl alcohol - starch film that is not susceptible to moisture absorption and exudation due to environmental temperature and humidity and a method for making the same. This technical problem is solved by a modified polyvinyl alcohol starch film indicated in claim 1 and a method indicated in claim 8. Preferred embodiments are set out in further claims

Accordingly, the obj ective may be achieved by following the teachings of the present invention. The present invention relates to a modified polyvinyl alcohol starch film, comprising by weight: about 30-70 parts by weight of starch; about 60-100 parts by weight of polyvinyl alcohol; about 10-30 parts by weight of plasticizer; about 0.1-20 parts by weight of modified aluminosilicate crystals; about 0.5-10 parts by weight of processing aids; about 0.1-10 parts by weight of polyhexamethylene guanidine hydrochloride; and 0.01-0.2 parts by weight of hydroxy ethyl methacrylate.

In a preferred embodiment, the present invention provides a modified polyvinyl alcohol starch film, the starch is preferably 45-75 parts by weight and the modified polyvinyl alcohol starch film further comprising optionally 10-50 parts by weight further starch.

In a preferred embodiment, the present invention provides a modified polyvinyl alcohol starch film, wherein: the polyvinyl alcohol has a polymerization degree of 500-3000 and an alcoholysis degree of 75-99%; and the starch is selected from one or more of a group consisting of corn starch, tapioca starch, oxidized starch, acetylated starch, and plantain flour.

In a preferred embodiment, the present invention provides a modified polyvinyl alcohol film, wherein the plasticizer is selected from one or more from a group consisting of propylene glycol, polyether polyol and starch plasticizer ZS-1804.

In a preferred embodiment, the present invention provides a modified polyvinyl alcohol starch film, wherein the modified aluminosilicate crystals are prepared by heating and mixing aluminosilicate crystals, aluminum-titanium coupling agent, and polyoxyethylene dodecyl ether for a certain period of time for use after cooling.

In a preferred embodiment, the present invention provides a modified polyvinyl alcohol starch film, wherein the mass ratio of aluminosilicate crystals, aluminium-titanium coupling agent, and polyoxyethylene dodecyl ether is 20: 2.5: 0.5 and the heating and mixing for a certain time is 15-45 minutes at 75-120 °C.

In a preferred embodiment, the present invention provides a modified polyvinyl alcohol starch film, wherein: the processing aid comprises an antioxidant, a lubricant and/or an opening agent, wherein the antioxidant is selected from one or more of a group consisting of antioxidant 1010, antioxidant 168, antioxidant 300, antioxidant TNP; the lubricant is selected from one or more of a group consisting of calcium stearate, zinc stearate, magnesium stearate, barium stearate; and the opening agent is selected from one or more of a group consisting of oleic acid amide, erucic acid amide, stearic acid amide, polyethylene glycol having a molecular weight at 2000-6000.

It is the second objective of the present invention to provide a method for preparing the above-mentioned modified polyvinyl alcohol starch film, so that the above-mentioned modified polyvinyl alcohol starch film can be better prepared, and the modified polyvinyl alcohol starch film prepared is not easily affected by environmental temperature and humidity, and it does not absorb moisture or exudate.

Accordingly, the obj ective may be achieved by following the teachings of the present invention. The present invention provides a method for preparing the above-mentioned modified polyvinyl alcohol starch film, the preparation method comprising:
(1) mixing modified aluminosilicate crystals with polyvinyl alcohol or a combination of polyvinyl alcohol and starch;
(2) mixing plasticizer with the product obtained in step (1);
(3) mixing polyhexamethyleneguanidine hydrochloride, hydroxyethyl methacrylate and water;
(4) mixing the products obtained from step (2) and step (3), then mixing the mixture thereof with processing aids;
(5) leaving the product obtained from step (4) at room temperature for a certain time;
(6) granulating and storing the product obtained from step (5) for a certain time; and
(7) subjecting the product obtained from step (6) to film blowing.

In a preferred embodiment, the present invention provides a method for preparing the above-mentioned modified polyvinyl alcohol starch film, wherein: the mixing in step (2) comprises mixing for 15-30 minutes under 50-85°C; and the mixing in steps (3) and (4) comprises mixing each for 5-10 minutes.

In a preferred embodiment, the present invention provides a method for preparing the above-mentioned modified polyvinyl alcohol starch film, wherein: the certain time of leaving of the product in step (5) is 12-48 hours; and the certain time of storing of the product in step (6) is 4-24 hours.

In a preferred embodiment, the present invention provides a method for preparing the above-mentioned modified polyvinyl alcohol starch film, wherein the temperature of granulation in step (6) is 185-205°C.

The beneficial effect of the present invention is that the modified polyvinyl alcohol starch film and the preparation method thereof can be used to better prepare the modified polyvinyl alcohol starch film, and the modified polyvinyl alcohol film prepared is not easily affected by environmental temperature and humidity, and does not absorb moisture or exudate.

The advantage of using modified aluminosilicate crystals as a modifier in this invention is that the modified aluminosilicate crystals are crystals with a specific structure and porous channels, with a particle size of 2-5 nm. This specific structure is characterized by a porous channel system in the particles, which leads to an extremely well coverage. Its own structure decides that it is an effective solubilizer which is not affected by temperature at higher temperatures and can effectively combine resin molecules into a tensile, extensional structure. The size of the polymer chain is smaller than the surface of the aluminosilicate crystal, so the two can be adsorbed very well. The degree of adsorption determines the strength of the bond and adhesion between the polymer and the aluminosilicate crystal, ensuring that the material has better melt-flow processing stability, excellent physical compatibility, and effectively reduces the melt processing temperature of the polymer by 15-20°C. This also helps effectively lock in the migration and exudation of small molecules.

The invention introduces the photothermal crosslinking of polyhexamethylene guanidine hydrochloride (PHMG) and 2-hydroxyethyl methacrylate (HEMA), which effectively inhibits the product's moisture absorption and exudation. The mechanism of the cross-linking reaction is as follows: the molecule of hydroxyethyl methacrylate contains a carbon-carbon double bond and a hydroxyl group, while PVA and starch have many hydroxyl groups. Through hydrogen bond reactions, PHMG is interspersed between the cross-linked structures and can undergo cross-linking reactions with hydroxyl-rich groups. The moisture absorption of the film products after the reaction is significantly improved.

The plasticizer of this invention can more effectively improve the plasticization of PVA and starch, which is beneficial to processing. The properties of water-soluble polymeric polymers lie between those of rubber and plastic. When PVA powder is heated to about 100°C, its appearance gradually changes. Partially saponified PVA begins to melt at 190°C and decomposes at 200°C. Wholly saponified PVA begins to melt at 230°C and decomposes at 240°C. The processing temperature range of PVA and starch is very narrow. The selection of polyol and polyether polyol compounding plasticizing systems can successfully widen the distance between the melting point and decomposition point. For ease of processing and application, the preferred plasticizers are selected from glycerin, polyethylene glycol, polyether polyol, and starch plasticizer (ZS-1804) (compound plasticizer).

The Chinese market has a large demand for PVA film, and the vast majority of it is imported from abroad at high prices. The applicant has conducted extensive research on the formulation and process of PVA film, and successfully found a plasticizing modifier that can reduce the plasticizing temperature of PVA by utilising a twin-screw extruder to granulate PVA starch and controlling the granulation temperature at 185-205°C. This research, based on the modification of domestic equipment, has realized the dry-melt granulation and blown film processing of PVA starch, while retaining the excellent properties of PVA starch such as water solubility, barrier properties and biodegradability. Compared with the wet and casting processes, it has advantages such as simple process, low energy consumption, high efficiency and low costs.

PVA film is widely recognized by society for its biodegradability and water solubility, as well as its versatile functions. However, existing PVA films cannot overcome the problems of high-temperature film bags with regard to water resistance, moisture absorption and exudation, and processing performance, which limits the development of PVA film applications. The reason is that the PVA molecular chain contains a large number of hydrophilic hydroxyl groups, with each repeating unit containing one hydroxyl group. Due to their small size, strong polarity, and easy formation of hydrogen bonds of the hydroxyl groups, the PVA film has strong water absorption and is prone to moisture absorption; while starch is also prone to moisture absorption due to its multiple hydroxyl groups. As a result, pure PVA starch films have poor water resistance, making it more susceptible to environmental humidity when it is used as packaging material. The modified polyvinyl alcohol starch film of the present invention has greatly improved moisture absorption and exudation properties, and it can be used in environments with high humidity and on rainy days without affecting its functionality.

The beneficial effects of the present invention are specifically disclosed as follows:
(1) The introduction of modified aluminosilicate crystals is very effective in improving the heat resistance, melt processing stability and melt fluidity of the polyvinyl alcohol film, as melting temperature is reduced by 15-20°C. The nanopores of modified aluminosilicate crystal adsorb a portion of small molecule compounds and reduce exudation of small molecules.
(2) The invention introduces the cross-linking effect of polyhexamethylene guanidine and guanidine methacrylate hydrochloride to change the molecular structure of the membrane, as well as the synergistic effect of the modified aluminosilicate crystals, which effectively overcomes the moisture absorption and exudation of the polyvinyl alcohol membrane.
(3) The unique plasticizing compound plays a crucial role in the polyvinyl alcohol film of the present invention. It effectively overcomes the problem in the prior art of adding a large amount of plasticizer to meet the requirements of melting and plasticizing, which artificially causes the problem of moisture absorption and exudation of the film product. The plasticizer of the present invention is simple and used in small quantity.
(4) The present invention solves the difficulty in improving the quality of polyvinyl alcohol film industry types, and can be widely used in wet casting and dry melt extrusion film blowing. Different types of films have different formulations, and all film formulation components are included in the formulation calibration range.
(5) This invention can also be widely used in normal-temperature, medium-temperature, high-temperature water-soluble films, as well as in PVA/starch/plant fiber/inorganic powder composite materials. For specific data, refer to Example 1 (normal temperature water-soluble film), Example 2 (medium temperature water-soluble film), and Example 3 (high temperature water-soluble film).

### DETAILED DESCRIPTION

For the purposes of promoting and understanding of the principles of the invention, reference will now be made to the examples described in the following written specification. It is understood that the present invention includes any alterations and modifications to the illustrated examples and includes further applications of the principles of the invention as would normally occur to one skilled in the art to which the invention pertains.

The following combined examples further illustrate specific examples of the present invention. The number of parts that appear in each example and control is the weight of the part. The polyvinyl alcohol starch film comprises and preferably consists of, in a weight proportion: 30-70 kg of starch; 60-100 kg of polyvinyl alcohol; 10-30 kg of plasticizer; 0.1-20 kg of modified aluminosilicate crystals; 0.5-10 kg of processing aids; 0.1-10 kg of polyhexamethylene guanidine hydrochloride; 0.01-0.2 kg of hydroxy ethyl methacrylate; and 10-50 kg of starch by option.

### Example 1: Preparation of modified polyvinyl alcohol film (1)

(1) Add 0.2 kg of modified aluminosilicate crystals to polyvinyl alcohol (PVA0588 -30 kg, PVA1788 -70 kg) in a high speed mixer and mix well;
(2) Add 18 kg of plasticizer (mixture comprising 15 kg of glycerine, 3.0 kg of ZS-1804 and 20 kg of deionized water) to the product obtained in step (1) and mix well while stirring at 50-85°C for 15-30 minutes;
(3) Add 50 kg of polyhexamethylene guanidine hydrochloride and 1 kg of 2-hydroxyethyl methacrylate to 45 kg of deionized water and mix well;
(4) Mix the product obtained in step (2) with 5 kg of the product obtained in step (3) (for 5-10 minutes), and then add 5 kg of processing aids and mix (for 5-10 minutes);
(5) Allow the product obtained in step (4) to stand at room temperature for a certain period of time (12-48 hours);
(6) Feed the product obtained in step (5) into a twin-screw granulator to melt, plasticize, extrude and granulate, with a granulation temperature of 185-205°C. Store the granules for a certain period of time (4-24 hours);
(7) Blow the product obtained in step (6) into a film in a film blowing machine.

Wherein:
In step (1), the modified aluminosilicate crystal is prepared as follows: weighing 95 parts of aluminosilicate crystal, 3 parts of aluminum-titanium coupling agent OL-1618 (Shanxi Taiyuan Research Institute of Chemical Industry) and 2 kg of polyoxyethylene lauryl ether, mixing the above ingredients and put the mixture into a high-speed mixer with heating. Stir mixture is stirred and heat it at 75-120°C for 15-45 minutes. Then, allow the product to cool and set it aside for later use.

### Example 2: Preparation of a modified polyvinyl alcohol film (2)

Replace PVA1788 with PVA1799, and the rest of the ingredients and steps are the same as in Example 1.

### Example 3: Preparation of a modified polyvinyl alcohol film (3)

Replace PVA1788 with PVA1799, the plasticizer with 25 kg, and in step (1) add also 15 kg of corn starch, and the rest of the ingredients and steps are the same as in Example 1.

### Comparative Example: Preparation of a modified polyvinyl alcohol film

Comprises 30kg of PVA0588, 70 kg of PVA1788, 20 kg of plasticizer (same composition as in Example 1) and 3kg of processing aid (same composition as in Example 1), all ingredients are weighed and charged into a high-speed mixer, mixed at 30-80°C for 15-30 minutes to plasticize. The mixture is set aside to rest for 12 hours, then melted and extruded at a temperature in the range of 60-180°Cto form granules. Set aside, and put the granules into the extruder to make the film.

### Example 4: Testing of modified polyvinyl alcohol film

The modified polyvinyl alcohol film prepared in Examples 1-3 and Comparative Example are tested for moisture absorption and exudation (the test is carried out at a temperature of 25°C and a relative humidity of 60%, and the test time is 12 hours, and the film thickness is 35µm), and the results are shown in Table 1 below.

**Table 1: Hygroscopicity and exudation test results**

| | Hygroscopicity (%) | Level of Exudation |
|---|---|---|
| Example 1 | 12 | Not obvious |
| Example 2 | 8 | Not obvious |
| Example 3 | 11 | Not obvious |
| Comparative Example | 18 | Noticeable greasy feeling |

A comprehensive analysis shows that Example 1 is a method for preparing a normal temperature water-soluble film, Example 2 is a method for preparing a medium temperature water-soluble film, and Example 3 is a method for preparing a PVA-water-soluble film containing starch. Comparative Example is the preparation of a normal temperature water-soluble film, but does not contain polyhexamethylenimine hydrochloride or aluminosilicate crystals. The results show that the invention is fully adaptable to different types of water-soluble membranes (including: normal-temperature water-soluble membranes - water-soluble at room temperature of about 25°C; medium-temperature water-soluble membranes, water-soluble at about 45°C; and high-temperature water-soluble membranes, water-soluble at about 65°C), and the moisture absorption and exudation are significantly improved. Although the method of the Comparative Example can produce a water-soluble membrane, it cannot overcome the moisture absorption and exudation of the water-soluble membrane. The method of Example 3, which contains starch, also has a very good effect, which further proves the reliability of the invention. Adding starch significantly reduces production costs, so it has great development potential.

The present invention explained above is not limited to the aforementioned example and drawings, and it will be obvious to those having an ordinary skill in the art of the prevent invention that various replacements, deformations, and changes may be made without departing from the scope of the invention.

## Claims

1. A modified polyvinyl alcohol starch film, comprising:
30-120 parts by weight starch;
60-100 parts by weight polyvinyl alcohol;
10-30 parts by weight plasticizer;
0.1-20 parts by weight modified aluminosilicate crystals;
0.5-10 parts by weight processing aids;
0.1-10 parts by weight polyhexamethylene guanidine hydrochloride; and
0.01-0.2 parts by weight hydroxyethyl methacrylate.

2. The modified polyvinyl alcohol starch film, according to claim 1, wherein the starch is preferably 45-75 parts by weight and the modified polyvinyl alcohol starch film further comprising optionally 10-50 parts by weight further starch.

3. The modified polyvinyl alcohol starch film, according to claim 1 or 2, wherein:
the polyvinyl alcohol has a polymerization degree of 500-3000 and an alcoholysis degree of 75-99%; and
the starch is selected from one or more of a group consisting of corn starch, tapioca starch, oxidized starch, acetylated starch, and plantain flour.

4. The modified polyvinyl alcohol starch film, according to one of claims 1 to 3, wherein the plasticizer is selected from one or more from a group consisting of glycerin, polyether polyol and starch plasticizer ZS-1804.

5. The modified polyvinyl alcohol starch film, according to one of claims 1 to 4, wherein the modified aluminosilicate crystals are prepared by heating and mixing aluminosilicate crystals, aluminum-titanium coupling agent, and polyoxyethylene dodecyl ether for a certain period of time for use after cooling.

6. The modified polyvinyl alcohol starch film, according to claim 5, wherein the mass ratio of aluminosilicate crystals, aluminium-titanium coupling agent, and polyoxyethylene dodecyl ether is 20: 2.5: 0.5.

7. The modified polyvinyl alcohol starch film, according to one of claims 1 to 6, wherein:
the processing aid comprises an antioxidant, a lubricant and/or an opening agent, wherein the antioxidant is selected from one or more of a group consisting of antioxidant 1010, antioxidant 168, antioxidant 300, antioxidant TNP;
the lubricant is selected from one or more of a group consisting of calcium stearate, zinc stearate, magnesium stearate, barium stearate; and
the opening agent is selected from one or more of a group consisting of oleic acid amide, erucic acid amide, stearic acid amide, polyethylene glycol having a molecular weight at 2000-6000.

8. A method of preparing a modified polyvinyl alcohol starch film, the method comprising:
(1) mixing modified aluminosilicate crystals with polyvinyl alcohol or a combination of polyvinyl alcohol and starch;
(2) mixing plasticizer with the product obtained in step (1);
(3) mixing polyhexamethylene guanidine hydrochloride, hydroxyethyl methacrylate and water;
(4) mixing the products obtained from step (2) and step (3), then mixing the mixture thereof with processing aids;
(5) leaving the product obtained from step (4) at room temperature for a certain time;
(6) granulating and storing the product obtained from step (5) for a certain time; and
(7) subjecting the product obtained from step (6) to film blowing.

9. The method of preparing a modified polyvinyl alcohol starch film, according to claim 8, wherein:
the mixing in step (2) comprises mixing for 15-30 minutes under 50-85°C; and
the mixing in steps (3) and (4) comprises mixing each for 5-10 minutes.

10. The method of preparing a modified polyvinyl alcohol starch film, according to claim 8 or 9, wherein:
the certain time of leaving of the product in step (5) is 12-48 hours; and
the certain time of storing of the product in step (6) is 4-24 hours.

11. The method of preparing a modified polyvinyl alcohol starch film, according to one of claims 8 to 10, wherein the temperature of granulation in step (6) is 185-205°C.

12. The method of one of claims 8 to 11, using the following components within the following ratio:
30-120 parts by weight starch;
60-100 parts by weight polyvinyl alcohol;
10-30 parts by weight plasticizer;
0.1-20 parts by weight modified aluminosilicate crystals;
0.5-10 parts by weight processing aids;
0.1-10 parts by weight polyhexamethylene guanidine hydrochloride; and
0.01-0.2 parts by weight hydroxyethyl methacrylate.

13. The method of one of claims 8 to 12 wherein the starch is preferably 45-75 parts by weight and the modified polyvinyl alcohol starch film further comprising optionally 10-50 parts by weight further starch.

14. The method of one of claims 8 to 13 wherein:
the polyvinyl alcohol has a polymerization degree of 500-3000 and an alcoholysis degree of 75-99%; and
the starch is selected from one or more of a group consisting of corn starch, tapioca starch, oxidized starch, acetylated starch, and plantain flour.

15. The method of one of claims 8 to 14 wherein the plasticizer is selected from one or more from a group consisting of glycerin, polyether polyol and starch plasticizer ZS-1804.

16. The method of one of claims 8 to 15 wherein the modified aluminosilicate crystals are prepared by heating and mixing aluminosilicate crystals, aluminum-titanium coupling agent, and polyoxyethylene dodecyl ether for a certain period of time for use after cooling.

17. The method of one of claims 8 to 16, wherein:
the mass ratio of aluminosilicate crystals, aluminium-titanium coupling agent, and polyoxyethylene dodecyl ether is 20: 2.5: 0.5 and the heating and mixing for a certain time is 15-45 minutes at 75-120 °C;
and/or
the processing aid comprises an antioxidant, a lubricant and/or an opening agent, wherein the antioxidant is selected from one or more of a group consisting of antioxidant 1010, antioxidant 168, antioxidant 300, antioxidant TNP; and the lubricant is selected from one or more of a group consisting of calcium stearate, zinc stearate, magnesium stearate, barium stearate; and the opening agent is selected from one or more of a group consisting of oleic acid amide, erucic acid amide, stearic acid amide, polyethylene glycol having a molecular weight at 2000-6000.
